# EUROPÄISCHE PATENTANMELDUNG

(11) **EP 1 568 556 A1**
(43) Veröffentlichungstag der Anmeldung: **31.08.2005**
(21) Anmeldenummer: 04030407.3
(22) Anmeldetag: 22.12.2004
(51) Int. Cl.: B60R 25/04

(54) **Verfahren zum Starten eines Fahrzeuges mit elektronischem Schliess- und Startsystem**

(30) Priorität: 28.02.2004 DE 102004009824
(71) Anmelder: Dr.Ing. h.c.F. Porsche Aktiengesellschaft, 70435 Stuttgart (DE)
(72) Erfinder: Glück, Herbert, 71292 Friolzheim (DE); Dahmen, Hans-Dieter, 75242 Neuhausen (DE); Kriechebauer, Joachim, 61184 Karben (DE)

(57) **Zusammenfassung**

Es wird ein Verfahren zum Starten eines Fahrzeuges mit einem elektronischen Schließ- und Startsystem vorgeschlagen, wobei der Zugang zum Fahrzeug nach einem bidirektionalen Datenaustausch zwischen einer vom Nutzer mitgeführten Sende- und Empfangseinheit zur Identifikation des Nutzers und einer im Fahrzeug angeordneten Sende- und Empfangseinheit freigegeben wird. Ein Startvorgang wird nach einem vom Nutzer initiierten Schlüssel - Steckt - Signal und dem gleichzeitigen Vorliegen weiterer abfragbarer Bedingungen freigegeben, wobei bei Fehlen der abfragbaren Bedingungen ein Notbetrieb zum Starten des Fahrzeuges freigegeben wird, wenn im Zündschloss ein Schlüssel mit integrierter Identifikationseinheit steckt, so dass mittels einer mechanischen Drehbewegung des Schlüssels durch den Nutzer der elektrische Zündkontakt geschlossen und das Fahrzeuges gestartet wird.

## Beschreibung

Es sind bereits verschiedene elektronische Schließ- und Startsysteme bekannt, bei welchen auf einen herkömmlichen Schlüssel verzichtet wird und mittels eines elektronischen Datenaustausches eine entsprechende Freigabe des Zugangsschlosses oder des Startsystems erfolgt.

So beschreibt die DE 199 43 233 A1 ein Schließsystem mit einer schlüssellosen Betätigungs- und/oder Schließeinrichtung für Kraftfahrzeuge, die eine bedienerseitige Sende- und Empfangseinheit und eine fahrzeugseitige Sende- und Empfangseinheit aufweist. Zwischen diesen beiden Sende- und Empfangseinheiten findet ein vorzugsweise bidirektionaler Datenaustausch statt, um bei einer Übereinstimmung des Signals das Fahrzeug zu öffnen.

Aus dem Bericht "Ein Fahrzeugsicherungssystem ohne mechanischen Schlüssel" in ATZ Automobiltechnische Zeitschrift 96 (1994) 5, Seiten 321 bis 330 ist des Weiteren bereits ein Schließsystem für Kraftfahrzeuge bekannt geworden, bei dem zur Erkennung der Zugangs- und Fahrberechtigung einzig das Vorhandensein einer gültigen Transponderkarte im Kreditkartenformat erforderlich ist. Diese Karte muss der Besitzer lediglich bei sich tragen, nicht aber in einen Leseschacht einführen. Die Betätigung von Bedienelementen auf der Karte soll entfallen. Der Benutzer tritt wie gewohnt vor das Fahrzeug, die Karte jedoch verbleibt an ihrem Platz, beispielsweise in der Tasche des Benutzers. Zieht er nun am Türgriff, so wird durch einen Türgriffkontakt das Fahrzeugsteuergerät aktiviert und nach einer entsprechenden Kommunikation mit der Karte erfolgt bei einer Übereinstimmung des abgefragten Codes das Öffnen der Türen. Auch beim Motorstart wird dieses Prinzip verwendet. So wird zunächst bei Betätigen eines Zündstartschalters die augenblickliche Position der Karte ermittelt. Erkennt das System eine Karte im Fahrzeuginnenraum, so wird auch hier eine entsprechende Kommunikation eingeleitet. Ist ein gültiger Code ermittelt worden, erfolgt die Initialisierung des Steuergerätes und das Anlassen des Motors.

Bei diesen Systemen mit einem Start-/Stopptaster im Innenraum des Fahrzeuges ist der zu realisierende Aufwand relativ hoch, da zusätzlich zu dem Start-/Stopptaster für einen Notbetrieb bei Ausfall der Datenübertragung zwischen einer Chipkarte und dem Fahrzeugsteuergerät ein herkömmliches Zündschloss vorzusehen ist.

Die vorliegende Erfindung hat demgegenüber den Vorteil, dass durch die Verwendung des herkömmlichen Zündschlosses ohne Änderung ein bisheriges System ohne weitere Kosten für eine konstruktive Veränderung übernommen werden kann. Das Stecken des Schlüssels bzw. das key-in-Signal an das Motorsteuergerät (Signal - Schlüssel - steckt) wird genutzt, um den Motor zu starten. Ein herkömmliches Drehen des Schlüssels ist im Normalbetrieb des Fahrzeuges nicht notwendig. Ferner hat dieses Verfahren den Vorteil, dass bei Ausfall einer Datenkommunikation der Zündschlüssel wie herkömmlich bekannt, einfach im Zündschloss zum Starten des Fahrzeuges gedreht werden muss.

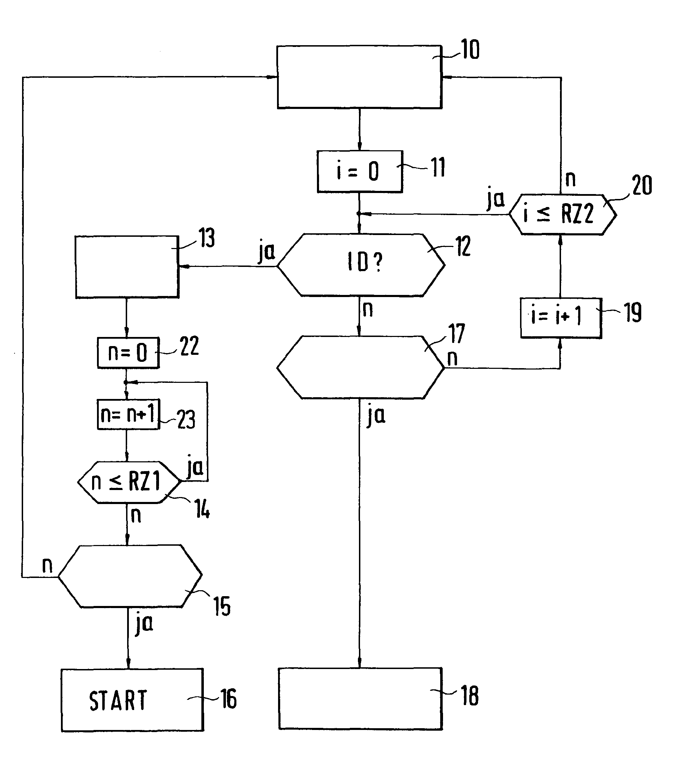

Das erfindungsgemäße Verfahren ist anhand der Figur dargestellt und im Folgenden näher erläutert.

Die einzige Figur zeigt den Ablaufplan des erfindungsgemäßen Verfahrens zum Starten eines Fahrzeuges mit einem elektronischen Schließ- und Startsystem.

Das erfindungsgemäße Verfahren dient zum sicheren Starten eines Fahrzeuges, wobei das Verfahren mit einem ersten Verfahrensschritt 10 immer dann beginnt, wenn ein "key-in-Signal" erkannt wird. Das heißt, das Zündschloss erkennt, dass ein Zündschlüssel gesteckt wurde, und setzt in einem nachfolgenden Arbeitsschritt 11 einen internen ersten Zähler zurück auf einen definierten Wert. So wird beispielsweise i = 0 gesetzt. Anschließend wird in einer Abfrage 12 geprüft, ob sich ein Identifikationsgeber, wie beispielsweise der Transponder der Chipkarte zum Öffnen des Fahrzeuges, im Inneren des Fahrgastraumes befindet. Ist der Transponder zu Identifizierung des Nutzers im Innenraum des Fahrzeuges, so wird in einem nachgeordneten Verfahrensschritt 13 die Zündung eingeschaltet. Anschließend wird sofort ein weiterer Zähler n = 0 auf einen definierten Wert gesetzt. Nach dem Setzen des Zählers n = 0 im Verfahrensschritt 22 wird der Zähler im Verfahrensschritt 23 um den Wert 1 erhöht, das bedeutet, n = n + 1. Nach der Erhöhung dieses Zahlenwertes wird im folgenden Arbeitsschritt 14 geprüft, ob der Zählerstand eine Referenzzahl RZ 1 überschreitet, so springt das Verfahren zurück an den Eingang des Schrittes 23, in welchem diese Referenzzahl nochmals erhöht wird. Das Vorsehen einer solchen Abfrage, die eine Mindestzeitdauer für das Vorliegen des Zündsignals realisiert, stellt sicher, dass ein kurzzeitiges Betätigen des Startvorganges nicht zu einem versehentlichen Motorstart führt. Ist also die Zündung für einen vorgebbaren Zeitraum eingeschaltet, so führt die Abfrage 14 an den nächsten Schritt 15, in welchem geprüft wird, ob gleichzeitig das Bremspedal und/oder das Kupplungspedal betätigt ist bzw. beim Automatikgetriebe ob der Gangwahlhebel in der Stellung Parken steht. Sind diese Bedingungen erfüllt, dann erfolgt im Arbeitsschritt 16 der Motorstart. Dies ist der normal übliche Startvorgang, wenn alle Signale im Fahrzeug vorliegen. Wurde dagegen in der Abfrage 12 festgestellt, dass der ID-Geber sich nicht im Innenraum des Fahrzeuges befindet, so wird als nächstes in der Abfrage 17 geprüft, ob der Zündschlüssel gesteckt und der Transponder des Zündschlüssels identifiziert ist. Ist dies der Fall, so kann über ein Drehen des Notschlüssels im Arbeitsschritt 18 die Notbetätigung erfolgen. Wurde die Abfrage, ob der Transponder im Zündschlüssel gestecktes mit nein beantwortet, so wird der unter 11 gesetzte Zähler i um 1 erhöht (i = i + 1). Anschließend wird im Arbeitsschritt 20 dieser Zahlenwert des Zählers i mit einer weiteren zweiten Referenzzahl RZ2 verglichen. Ist der Zählerstand i kleiner als diese vorgebbare zweite Referenzzahl RZ2, so führt der Ausgang der Abfrage 20 an den Verfahrensschritt 12. Ein nein auf die Abfrage 20, was bedeutet, dass der Zählerstand i größer als RZ2 ist, führt zurück zum Anfang des Verfahrens. Diese Schleife mit dem Zähler i ist notwendig, um sicherzugehen, dass der ID-Geber nicht im Fahrzeuginnenraum ist und nicht unnötigerweise eine Notbetätigung freigeschaltet wird.

## Patentansprüche

1. Verfahren zum Starten eines Fahrzeuges mit einem elektronischen Schließ- und Startsystem, wobei der Zugang zum Fahrzeug nach einem bidirektionalen Datenaustausch zwischen einer vom Nutzer mitgeführten Sende- und Empfangseinheit zur Identifikation des Nutzers und einer im Fahrzeug angeordneten Sende- und Empfangseinheit freigegeben wird, wobei ein Startvorgang nach einem vom Nutzer initiierten Schlüssel - Steckt - Signal und dem gleichzeitigen Vorliegen weiterer abfragbarer Bedingungen freigegeben wird und wobei bei Fehlen der abfragbaren Bedingungen ein Notbetrieb zum Starten des Fahrzeuges freigegeben wird, wenn im Zündschloss ein Schlüssel mit integrierter Identifikationseinheit steckt, so dass mittels einer mechanischen Drehbewegung des Schlüssels durch den Nutzer der elektrische Zündkontakt geschlossen und das Fahrzeuges gestartet wird.

2. Verfahren nach Anspruch 1, **dadurch gekennzeichnet, dass** die weiteren abfragbaren Bedingungen zumindest das Vorhandensein der Sende- und Empfangseinheit zur Identifikation des Nutzers im Fahrgastraum des Fahrzeuges, ein Zündsignal und bedientes Brems- und/oder Kupplungspedal bzw. bei Fahrzeugen mit Automatikgetrieben eine Wählhebelstellung in der Position P sind.

3. Motorstartsystem nach Anspruch 1 oder 2, **dadurch gekennzeichnet, dass** die Abfrage, ob der Zündschlüssel steckt, nach fehlendem Fahrtberechtigungsnachweis im Inneren des Fahrgastraumes für eine vorgebbare Anzahl von Vorgängen wiederholt geprüft wird.
